# EUROPÄISCHE PATENTSCHRIFT

(11) **EP 1 062 790 B1**
(45) Veröffentlichungstag und Bekanntmachung des Hinweises auf die Patenterteilung: **30.01.2008**
(21) Anmeldenummer: 99917763.7
(22) Anmeldetag: 03.03.1999
(51) Int. Cl.: H04M 1/274, H04M 1/00, H04M 3/50

(54) **VERFAHREN ZUM ERMITTELN UND VERARBEITEN VON FÜR DEN AUFBAU EINER TELEFONVERBINDUNG IN EINEM CTI-SYSTEM RELEVANTEN INFORMATIONEN UND ENTSPRECHENDES CTI-SYSTEM**
METHOD FOR DETECTING AND PROCESSING INFORMATION RELEVANT TO ESTABLISHING A TELEPHONE CONNECTION IN A CTI SYSTEM AND CORRESPONDING CTI SYSTEM
PROCEDE POUR DETECTER ET TRAITER DES INFORMATIONS SERVANT A ETABLIR UNE COMMUNICATION TELEPHONIQUE DANS UN SYSTEME ITO (INTEGRATION TELEPHONIQUE PAR ORDINATEUR), ET SYSTEME ITO CORRESPONDANT

(30) Priorität: 18.03.1998 DE 19811829
(43) Veröffentlichungstag der Anmeldung: 27.12.2000
(73) Patentinhaber: Siemens Enterprise Communications GmbH & Co. KG, 81379 München (DE)
(72) Erfinder: KRAUSS, Dietmar, D-45131 Essen (DE); KRÜGER, Uwe, D-45131 Essen (DE)
(74) Vertreter: Maier, Daniel Oliver
(86) Internationale Anmeldenummer: PCT/DE1999/000559
(87) Internationale Veröffentlichungsnummer: WO 1999/048265

(56) Entgegenhaltungen:
- EP-A- 0 822 698
- WO-A-97/35416
- US-A- 5 202 828
- US-A- 5 315 705

## Beschreibung

Die vorliegende Erfindung betrifft ein Verfahren zum Ermitteln und Verarbeiten von für den Aufbau einer Telefonverbindung in einem CTI-System relevanten Informationen sowie ein CTI-System, in welchem ein derartiges Verfahren angewendet wird.

CTI (Computer Telephony Integration) steht für die Verbindung der Computertechnologie einerseits mit der Telefontechnologie andererseits, d. h. für die computerunterstützte Telekommunikation. Durch die Verwendung der Computertechnologie können Anrufe gesteuert werden, so daß eine computergestützte Rufnummernwahl, Rufüberwachung oder Rufweiterleitung möglich ist. Des weiteren ist durch den Einsatz der CTI-Technik die computergestützte Verarbeitung von infolge einer Telekommunikationsverbindung übermittelten Informationen möglich, so daß eine computergestützte Datenübermittlung, Spracherkennung oder Tonerzeugung durchgeführt werden kann.

Beim Aufbau von CTI-Systemen wird im Prinzip zwischen zwei unterschiedlichen CTI-Systemarten unterschieden. So ist einerseits eine direkte Kopplung eines Computers (Personal Computers) mit einem Telefon-Endgerät denkbar, während andererseits eine sogenannte Client/Server-Lösung zum Einsatz kommen kann, gemäß der ein Computer über ein lokales Netz (local area network, LAN) mit einem CTI-Server verbunden ist, der wiederum direkt an eine Telekommunikations-Anlage (TK-Anlage) angeschlossen ist. Der Aufbau von CTI-Systemen hat einen erheblichen Einfluß auf die Art und Weise der Anrufsteuerung. Während bei einer direkten Kopplung zwischen einem Computer und einem Telefon-Endgerät der Computer lediglich das daran angeschlossene Telefon steuern kann (sogenannte First-Party Call Control), ist es bei dem Einsatz der Client/Server-Lösung zudem möglich, von einer zentralen Instanz aus mehrere Telefone und entsprechend mehrere Gespräche zu steuern (sogenannte Third-Party Call Control).

Neben diesen grundlegenden Unterscheidungsmöglichkeiten werden oft auch Programmierschnittstellen (Application Programming Interface, API) und Protokolle für die Beschreibung von CTI-Lösungen verwendet. Die Programmierschnittstellen stellen die Schnittstelle zu den auf dem jeweiligen Computer laufenden CTI-Anwendungen (CTI-Applikationen) dar und setzen bei der Client/Server-Lösung direkt auf den jeweils verwendeten CTI-Server auf. Bekannte Arten von CTI-Programmierschnittstellen sind TAPI (Telephony Application Programming Interface) und TSAPI (Telephony Services Application Programming Interface). Neben CTI-Servern, die lediglich eine Programmierschnittstelle aufweisen, sind auch CTI-Server mit mehreren dieser Programmierschnittstellen bekannt. Ein bekanntes CTI-Protokoll ist das sogenannte CSTA (Computer Supported Telecommunications Applications), das von vielen Telekommunikationsanlagen-Herstellern für die Anwendung von CTI-Servern unterstützt wird.

In CTI-Systemen stellen CTI-Anwendungen die Schnittstelle zum Benutzer des CTI-Systems dar. Diese CTI-Anwendungen sind in der Regel auf dem jeweiligen Computer laufende Zusatzprogramme, die einerseits von dem Benutzer bedient werden können und andererseits durch die zuvor beschriebenen Programmierschnittstellen direkt mit dem entsprechenden Telefon-Endgerät oder dem CTI-Server verbunden sind. Diese CTI-Anwendungen sind in der Regel in der Lage, Rufnummern zu verwalten bzw. auf bestehende Adreßbestände (mit entsprechenden Rufnummern) zuzugreifen und andere Anwendungen zu starten. Darüber hinaus bieten sie die Möglichkeit, von anderen auf dem Computer laufenden Programmen aus durch Übermittlung von zu wählenden Rufnummern über sogenannte DDE-Funktionen (Dynamic Data Exchange) ferngesteuert zu werden. Mit der Einführung der TAPI-Schnittstelle in der Windows-Technologie sind bestimmte Programme auch in der Lage, selber auf das jeweils angeschlossene Telefon-Endgerät zuzugreifen, wobei in der Regel die weitere Bearbeitung eines Gesprächs den einzelnen CTI-Anwendungen überlassen bleibt.

Die Druckschrift US-A-5 202 828 bezieht sich auf eine Benutzerschnittstelle eines Computersystems, die so ausgestaltet ist, daß Informationselemente in verschiedenen Anwendungen markiert und verarbeitet werden können. Die Druckschrift WO 97 35416 bezieht sich auf ein System zur Abfrage von Adress-Informationen von einem Directory-Dienst.

Wie aus der vorhergehenden Beschreibung ersichtlich ist, beschränkt sich derzeit in CTI-Systemen die Fähigkeit, über einen Computer (Personal Computer, PC) Rufnummern zu wählen, auf die jeweiligen CTI-Anwendungen selber oder auf Zusatzprogramme, die entweder einen direkten Zugriff auf die TAPI-Schnittstelle haben oder mit Hilfe der DDE-Funktionen die CTI-Anwendungen fernsteuern können. Rufnummern, die in beliebigen anderen Anwendungen oder Applikationen (z. B. Textverarbeitungsprogrammen oder Datenbanken) vorliegen, können nur umständlich, z. B. unter Windows durch Nutzung der sogenannten Zwischenablagefunktion, oder gar nicht zum Wählen und zum Aufbau einer Telekommunikationsverbindung verwendet werden. Dasselbe gilt für Namens- und Adreßinformationen, die gegebenenfalls mit entsprechenden Rufnummerninformationen gekoppelt sein können.

Der vorliegenden Erfindung liegt daher die Aufgabe zugrunde, ein Verfahren sowie ein entsprechendes CTI-System vorzuschlagen, um anwendungsunabhängig auf für eine Rufnummernwahl relevante Informationen zugreifen und diese weiterverarbeiten zu können.

Diese Aufgabe wird gemäß der vorliegenden Erfindung durch ein Verfahren mit dem Merkmalen des Anspruches 1 bzw. ein CTI-System mit den Merkmalen des Anspruches 17 gelöst. Die Unteransprüche beschreiben jeweils vorteilhafte und bevorzugte Ausführungsbeispiele der vorliegenden Erfindung, die ihrerseits einen möglichst einfachen und anwendungsübergreifenden Zugriff bzw. eine entsprechende Weiterverarbeitung der für den Aufbau einer Telekommunikationsverbindung relevanten Informationen ermöglichen.

Das Grundprinzip der vorliegenden Erfindung besteht im wesentlichen darin, daß ein Benutzer des CTI-Systems zunächst eine relevante Zeichenfolge (String) auf dem Bildschirm des Computers des CTI-Systems erkennt und auswählt, was insbesondere durch Markierung dieser relevanten Zeichenfolge erfolgen kann. Anschließend wird der Inhalt der markierten Zeichenfolge gelesen und ausgewertet, wobei abhängig davon, ob die markierte Zeichenfolge Zahlen oder Buchstaben oder eine Kombination von Zahlen und Buchstaben enthält, unterschiedliche Verarbeitungsfunktionen des CTI-Systems hinsichtlich der markierten Zeichenfolge zur Anwendung kommen, so daß bei Erkennen einer Ziffernfolge beispielsweise daraus eine Wahlinformation abgeleitet und das automatische Wählen der Rufnummer über die vorhandene Telefonschnittstelle durchgeführt werden kann. Bei Erkennen einer Buchstabenfolge kann über eine vorhandene Schnittstelle zu einem Verzeichnis-Server (Directory Server) eine Suche nach dieser Buchstabenfolge als Namenseintrag in der Datenbank des Verzeichnis-Servers, der mehrere elektronische Adreßbücher mit entsprechenden Rufnummerneinträgen speichern kann, durchgeführt werden. Wird von dem Verzeichnis-Server eine für eine Wahlinformation relevante Ziffernfolge (Ziffern-String) zurückgemeldet, so wird diese gemäß einem bevorzugten Ausführungsbeispiel genauso wie eine von dem Benutzer markierte Ziffernfolge behandelt und an die Telefonschnittstelle ein entsprechender Steuerbefehl zum Wählen der der Ziffernfolge entsprechenden Rufnummer übergeben.

Die vorliegende Erfindung ist völlig unabhängig von der Art des verwendeten CTI-Systems sowie der jeweils verwendeten CTI-Anwendung, welche auf dem Computer des CTI-Systems läuft. Die vorliegende Erfindung kann demnach sowohl auf CTI-Systeme mit einzelnen Telefon-Endgeräten als auch auf CTI-Systeme mit Client/Server-Lösungen eingesetzt werden. Infolge der vorliegenden Erfindung ist es für einen Benutzer möglich, unabhängig von der aktuell verwendeten Anwendung (Applikation) direkt vom Computer- bzw. Bildschirmarbeitsplatz des CTI-Systems heraus eine Telefonverbindung aufzubauen bzw. eine Adressenanfrage an einen Verzeichnis-Server zu starten. Vorteilhafterweise werden bei der vorliegenden Erfindung Standard-Schnittstellen vom Typ TAPI und LDAP (Lightweight Directory Access Protocol) eingesetzt, die dem Benutzer zahlreiche Anwendungsmöglichkeiten eröffnen. Die vorliegende Erfindung ermöglicht die Realisierung von ganzheitlichen Lösungen im CTI-Bereich, die z. B. auch die Rufnummernwahl aus Internet-Browsern heraus beinhalten können.

Die vorliegende Erfindung wird nachfolgend anhand eines bevorzugten Ausführungsbeispiels der vorliegenden Erfindung unter Bezugnahme auf die beigefügte Zeichnung näher erläutert.
Figur 1 zeigt ein bevorzugtes Ausführungsbeispiel eines CTI-Systems gemäß der vorliegenden Erfindung,
Figur 2 zeigt eine detaillierte Ansicht der bei dem in Figur 1 gezeigten CTI-System eingesetzten Rechneranordnung,
Figur 3a und 3b zeigen ein Flußdiagramm, welches einem bevorzugten Ausführungsbeispiel des erfindungsgemäßen Verfahrens entspricht, und
Figur 4 und 5 zeigen verschiedene Bildschirmausgaben auf dem in Figur 1 und 2 gezeigten Rechner des erfindungsgemäßen CTI-Systems bei Anwendung des in Figur 3a und 3b gezeigten erfindungsgemäßen Verfahrens.

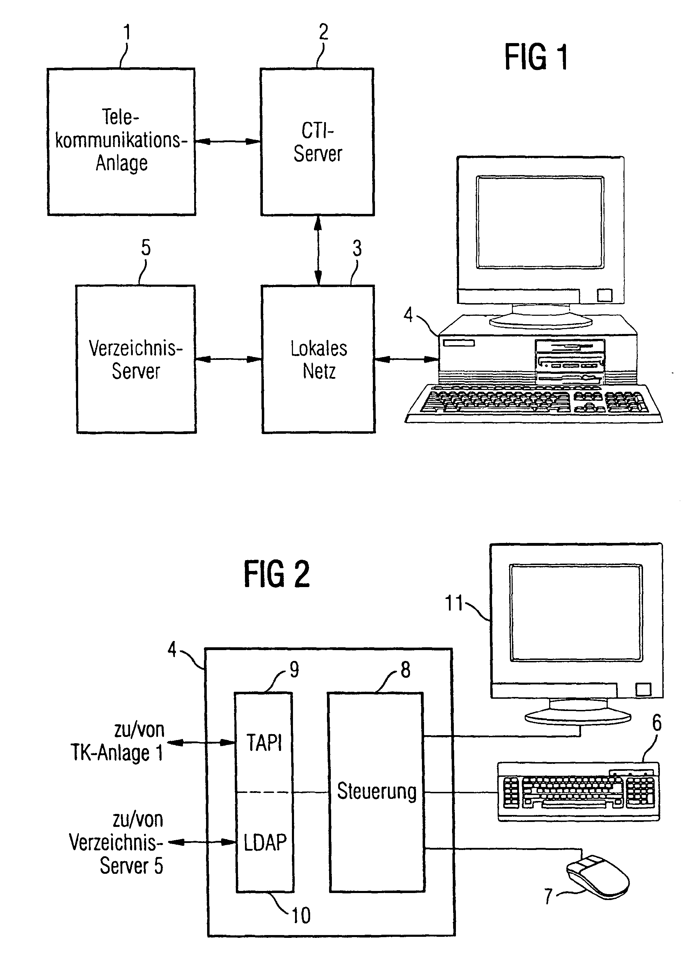

Figur 1 zeigt beispielhaft den Aufbau eines CTI-Systems gemäß der vorliegenden Erfindung, wobei in Figur 1 insbesondere schematisch der Aufbau eines CTI-Systems gemäß der sogenannten Client/Server-Lösung dargestellt ist. Die vorliegende Erfindung kann jedoch selbstverständlich auch auf andere CTI-Systeme angewendet werden, so z. B. auch auf ein CTI-System, bei dem ein Rechner oder Computer direkt mit einem Telefon-Endgerät gekoppelt ist.

Wie in Figur 1 gezeigt ist, ist ein Computer (Personal Computer, PC) oder eine Rechneranordnung über ein lokales Netz (local area network, LAN) 3 oder einen lokalen Netzverbund mit einem CTI-Server 2 verbunden, der wiederum direkt mit einer Telekommunikationsanlage 1 gekoppelt ist. Des weiteren kann an das lokale Netz 3 ein Verzeichnis-Server 5 (Directory Server) angeschlossen sein, der z. B. mehrere elektronische Adreßbücher in Form einer Datenbank speichern kann, welche mehrere Namens-, Adressen- und Rufnummerneinträge beinhalten. Mit Hilfe des Rechners 4 kann einerseits der Aufbau von Telefonverbindungen über die Telekommunikationsanlage 1 gesteuert (z. B. automatische Rufnummernwahl, Rufüberwachung und Rufweiterleitung) und andererseits über die Telekommunikationsanlage 1 übermittelte Informationen verarbeitet werden, so daß eine rechnergestützte Datenübermittlung, Spracherkennung oder Tonerzeugung usw. möglich ist. Des weiteren kann mit Hilfe des Rechners 4 auf die Adressenbücher des Verzeichnis-Servers 5 zugegriffen werden, um abhängig von den dort gespeicherten Einträgen automatisch gewünschte Rufnummern über die Telekommunikationsanlage 1 wählen zu können.

Figur 2 zeigt schematisch eine detaillierte Ansicht der bezüglich der vorliegenden Erfindung relevanten Teile des in Figur 1 gezeigten Rechners 4. An den Rechner 4 ist einerseits ein Monitor oder Bildschirm 11 sowie andererseits eine Tastatur (Keyboard) 6 und eine Maus 7 angeschlossen. Ebenso ist der Einsatz weiterer externer Steuergeräte, wie z. B. der Einsatz eines sogenannten "Track Ball" oder "Touch Pad" möglich. Des weiteren weist der Rechner 4 ein zentrales Steuerungsmodul 8 auf, welches vorteilhafterweise in Form einer unter der Windowsoberfläche laufenden Anwendungsprogramms softwaremäßig realisiert ist. Dieses Steuerungsmodul 8 stellt die Verbindung zwischen den externen Rechnereinheiten 5-7 und vorhandenen Schnittstellen 9, 10 dar. Gemäß Figur 2 weist der Rechner 4 beispielsweise zwei unterschiedliche Anwendungsschnittstellen auf. Selbstverständlich ist jedoch auch der Einsatz einer davon abweichenden Anzahl von Anwendungsschnittstellen möglich. Bei der Schnittstelle 9 handelt es sich beispielsweise um eine softwaremäßige Standard-Telefonschnittstelle vom Typ TAPI (Telephony Application Programming Interphase) oder TSAPI (Telephony Services Application Programming Interface), mit deren Hilfe anhand zur Verfügung stehenden Wahlinformationen der Aufbau einer Telefonverbindung über die in Figur 1 gezeigte Telekommunikationsanlage 1 initiiert werden kann. Bei der Schnittstelle 10 handelt es sich hingegen um eine softwaremäßige Standardschnittstelle zum Protokoll LDAP (Lightweight Directory Access Protocol), mit dessen Hilfe auf den in Figur 1 gezeigten Verzeichnis-Server 5 bzw. dessen Adressendatenbanken zugegriffen werden kann. Selbstverständlich ist auch der Einsatz anderer bzw. weiterer Schnittstellen möglich, wobei durch die Unterstützung offener Schnittstellen ein besonders breiter Anwendungsbereich realisiert werden kann.

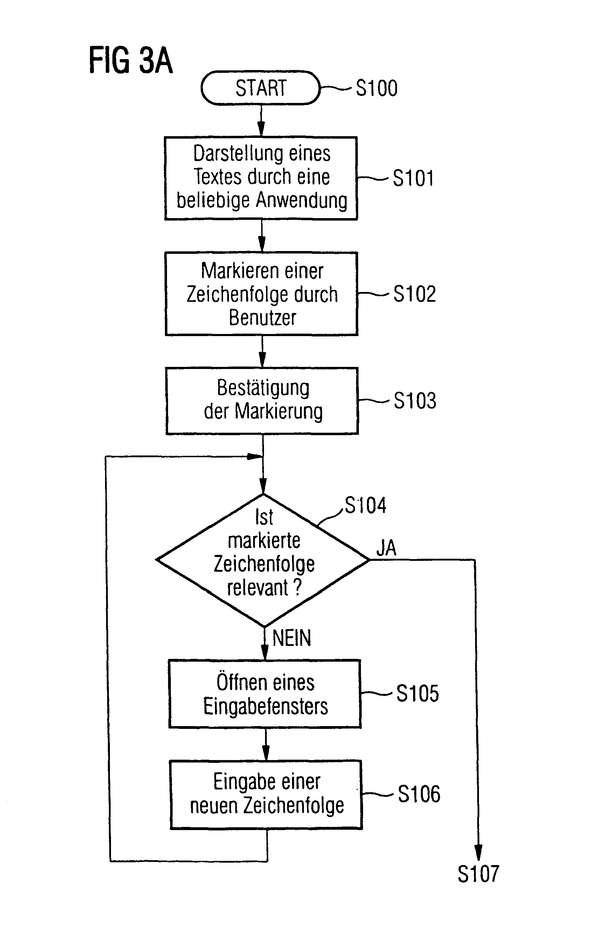

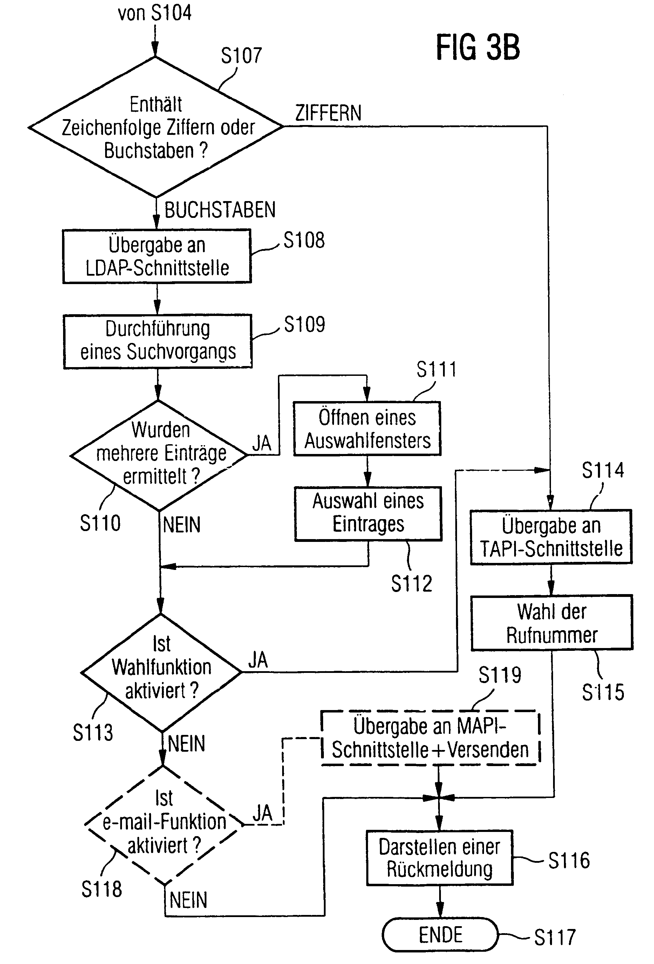

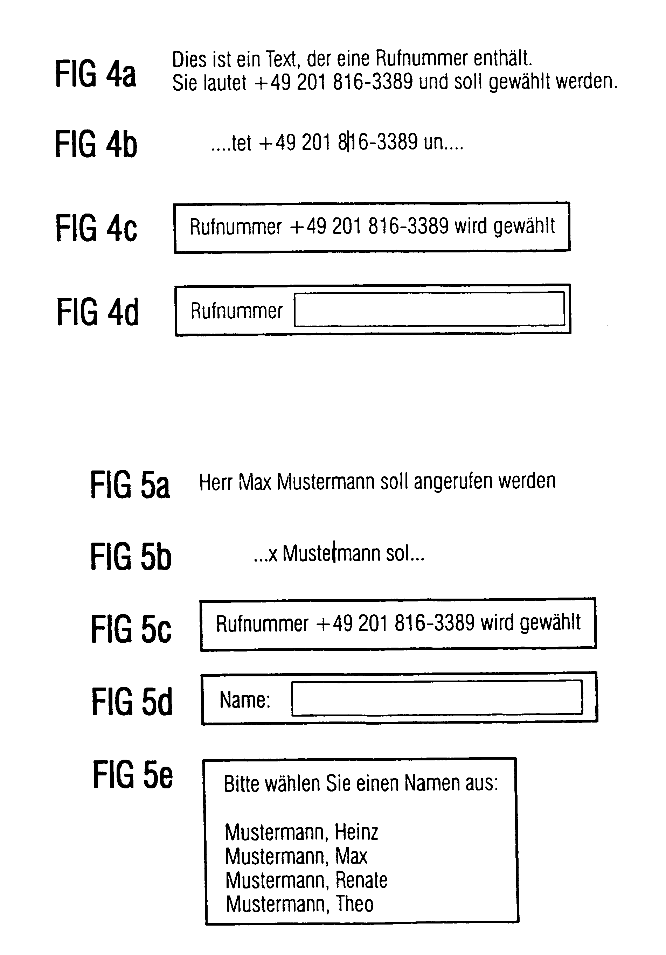

Der Rechner 4 bzw. das darauf implementierte und in Figur 2 gezeigte Steuerungsmodul 8 sowie die damit gekoppelten Schnittstellen 9 und 10 sind derart ausgestaltet, daß sie eine Ermittlung und Weiterverarbeitung von für den Aufbau einer Telefonverbindung über das in Figur 1 gezeigte CTI-System relevanten Informationen gemäß dem in Figur 3a und 3b gezeigten Verfahren ermöglichen. Dies soll nachfolgend näher anhand des in Figur 3a und 3b gezeigten Flußdiagramms erläutert werden, wobei zudem auf die in Figur 4 und 5 gezeigten Darstellungen Bezug genommen wird.

Das in Figur 3a und 3b dargestellte Verfahren ermöglicht für den Computer- und Bildschirmarbeitsplatz des in Figur 1 und 2 gezeigten Rechners 4 anwendungsübergreifend, d. h. unabhängig von der jeweils benutzten Anwendung oder dem auf dem Rechner laufenden Programm und unabhängig von dem jeweils verwendeten Betriebssystem, einen durch Anwendungen oder Programme dargestellten und über den Bildschirm 11 des Rechners 4 visualisierten Zeichenstring zu erkennen und mit Hilfe des in Figur 2 gezeigten Steuerungsmoduls 8, welches einem speziellen Programm bzw. einer speziellen Applikation entspricht, auszuwerten, um den jeweils vom Benutzer ausgewählten Zeichenstring abhängig von seiner Zusammensetzung bzw. seinem Inhalt mit Hilfe der Schnittstellen 9, 10 unterschiedlichen Verarbeitungsfunktionen zu unterziehen.

Ausgangspunkt des in Figur 3a und 3b gezeigten Verfahrens ist daher die Darstellung eines beliebigen Textes bzw. einer beliebigen Zeichenfolge auf dem Bildschirm 11 des Rechners 4 (Schritte S100, S101), wobei die Darstellung insbesondere durch ein auf dem Rechner 4 laufendes Anwendungsprogramm, wie z. B. ein Textverarbeitungsprogramm oder dergleichen, hervorgerufen worden sein kann. Figur 4a und Figur 5a zeigen beispielhaft Textausgaben auf dem Bildschirm 11 des Rechners 4, wobei der in Figur 4a dargestellte Text eine einer Rufnummer entsprechende Ziffernfolge enthält, während der in Figur 5a dargestellte Text den Namen ("Mustermann") eines anzurufenden Teilnehmers aufweist.

Um die in Figur 4a dargestellte Rufnummer zu wählen, markiert nun der Benutzer des Rechners 4 die entsprechende Ziffernfolge (Schritt 102), wobei dies wie üblich beispielsweise dadurch erfolgen kann, daß die am Bildschirm 11 verfügbare Eingabeposition (Cursor) auf die zu markierende Zeichenfolge gesetzt wird und anschließend durch Betätigung einer bestimmten Taste der in Figur 2 gezeigten Tastatur 6 und/oder Maus 7 die Markierung bestätigt wird, wodurch in der Regel die von dem Cursor bezeichnete Zeichenfolge visuell hervorgehoben wird. Dieser Vorgang ist in Figur 4b dargestellt. Ebenso ist selbstverständlich auch die Markierung des in dem in Figur 5a dargestellten Text enthaltenen Namens "Mustermann" möglich, was entsprechend in Figur 5b dargestellt ist.

Anschließend wird die von dem Benutzer markierte Zeichenfolge, d. h. die in Figur 4a markierte Ziffernfolge bzw. die in Figur 5b markierte Buchstabenfolge, ausgewertet und der Inhalt der jeweils markierten Zeichenfolge von der in Figur 2 gezeigten Anwendung 2 gelesen und auf Relevanz überprüft, um diese Zeichenfolge anschließend zur Weiterverarbeitung über die Schnittstellen 9 und 10 (vgl. Figur 2) freizugeben. Nach Lesen des Inhalts der markierten Zeichenfolge wird somit zunächst im Schritt S104 geprüft, ob die markierte Zeichenfolge überhaupt für eine Rufnummernwahl relevant ist bzw. relevant sein kann. So kann die im Schritt S104 durchgeführte Überprüfung beispielsweise beinhalten, daß festgestellt wird, ob es sich überhaupt um eine sinnvolle Ziffern- bzw. Buchstabenfolge handelt, die für eine Rufnummernwahl geeignet ist. Insbesondere kann die Überprüfung auch über die in Figur 2 gezeigten Schnittstellen 9 und 10 erfolgen, da auf diese Weise bereits festgestellt werden kann, ob mit Hilfe der markierten Ziffernfolge (Figur 4b) eine Rufnummernwahl überhaupt möglich ist bzw. für die markierte Buchstabenfolge (vgl. Figur 5b) überhaupt ein entsprechender Eintrag in dem in Figur 1 gezeigten Verzeichnis-Server 5 vorhanden ist. Konnte im Schritt S104 die markierte Ziffernfolge nicht als Rufnummer bzw. die markierte Buchstabenfolge nicht als Name korrekt erkannt werden und somit keine Relevanz des jeweils markierten Strings durch die in Figur 2 gezeigte Steuerung 8 festgestellt werden, wird durch die Steuerung 8 ein Eingabefenster geöffnet, welches eine Hilfefunktion für den Benutzer darstellt, um eine gegebenenfalls korrigierte Zeichenfolge manuell (über die Tastatur 6) eingeben zu können (Schritte S105 und S106). Dieses Eingabefenster ist schematisch in Figur 4d bzw. 5d dargestellt. Nach Eingabe einer korrigierten Rufnummer bzw. eines korrigierten Namens wird erneuert im Schritt S104 die Relevanz der somit neu eingegebenen Zeichenfolge überprüft und somit der anschließenden Weiterverarbeitung anstelle der ursprünglich markierten Zeichenfolge zugrundegelegt.

Nachdem die Relevanz der vorliegenden Zeichenfolge im Schritt S104 erkannt worden ist, erfolgt die eigentliche Verarbeitung der jeweiligen Zeichenfolge. Dabei kann die Zeichenfolge abhängig von ihrem Inhalt unterschiedlichen Verarbeitungsfunktionen unterzogen werden, d. h. eine Ziffernfolge kann auf andere Art und Weise verarbeitet werden als eine Buchstabenfolge und hat demzufolge andere Abläufe in dem CTI-System zur Folge.

Vorzugsweise ist die weitere Verarbeitung für den Benutzer frei konfigurierbar, d. h. der Benutzer kann beispielsweise die Programmierung des Rechners 4 festlegen, wie die jeweils markierte Zeichenfolge abhängig von ihrem jeweiligen Inhalt weiterzubehandeln ist. Diesbezüglich ist insbesondere der Einsatz eines kontextabhängigen Auswahlmenüs für die Weiterverarbeitung des jeweils markierten Strings denkbar.

Im vorliegenden Fall wird gemäß Figur 3b zunächst unterschieden, ob es sich bei der markierten und gelesenen Zeichenfolge um eine Ziffern- oder Buchstabenfolge handelt (Schritt S107).

Handelt es sich um eine Ziffernfolge, übergibt die in Figur 2 gezeigt Steuerung 8 gegebenenfalls nach Empfang von zusätzlichen benutzerabhängigen Steuerinformationen (die über die Tastatur 6 oder die Maus 7 usw. eingegeben werden können) diese Ziffern als Wahlinformation an die in dem Rechner 4 implementierte Standard-Telefonschnittstelle (TAPI) 9 (Schritt S114).

Diese softwaremäßige Standard-Telefonschnittstelle 9 kann nunmehr automatisch oder nach einer Bestätigung durch den Benutzer anhand der zur Verfügung stehenden Wahlinformationen, die der vom Benutzer ursprünglich markierten Ziffernfolge entsprechen (vgl. Figur 5b), über die in Figur 1 gezeigte Telekommunikationsanlage 1 den Aufbau einer entsprechenden Telefonverbindung initiieren, d. h. die entsprechende Rufnummer wählen (Schritt S115). Anschließend erfolgt eine entsprechende Rückmeldung auf dem Bildschirm 11 des Rechners 4 (Schritt S116), wobei dies beispielhaft in Figur 5c dargestellt ist.

Wurde hingegen im Schritt S107 erkannt, daß es sich bei der vorliegenden Zeichenfolge um eine Buchstabenfolge handelt, erfolgt eine andere Verarbeitung dieser Buchstabenfolge. Zunächst wird die Buchstabenfolge von der in Figur 2 gezeigten Applikation 8 an die ebenfalls in Figur 2 gezeigte LDAP-Schnittstelle 10 übergeben, die diese Buchstabenfolge einer Suchoperation auf den Datenbanken des in Figur 1 gezeigten Verzeichnis-Servers 5 unterzieht. Im vorliegenden Fall ist die Funktion der Applikation 8 und der LDAP-Schnittstelle 10 derart konfiguriert, daß die LDAP-Schnittstelle 10 bei Vorliegen einer Buchstabenfolge nach Empfang zusätzlicher benutzerabhängiger Steuerinformationen eine Namenssuche in den Adressenbüchern des Verzeichnis-Servers 5 durchführt (Schritte S108 und S109), d. h. mit Hilfe der LDAP-Schnittstelle 10 wird eine entsprechende Suchabfrage an den Verzeichnis-Server 5 gestartet. Mit Hilfe der zuvor beschriebenen zusätzlichen Steuerinformationen, die ein Benutzer über die Tastatur 6 oder Maus 7 usw. eingeben kann, kann beispielsweise festgelegt sein, daß lediglich in einem bestimmten Adressenbuch des Verzeichnis-Servers 5 gesucht oder der markierte Namen als neuer Eintrag in ein bestimmtes Adressenbuch des Verzeichnis-Servers 5 übernommen werden soll. Mit Hilfe des Suchvorgangs im Schritt S109 können beispielsweise dem markierten Namen entsprechende Rufnummern- oder e-mail-Adresseneinträge usw. auf dem Verzeichnis-Server 5 ermittelt werden.

Ebenso ist die Aktivierung einer Wahlfunktion derart möglich, daß mit Hilfe des Rechners 4 bei Auffinden eines entsprechenden Eintrags im Verzeichnis-Server 5 automatisch die dem markierten Name entsprechende Rufnummer ausgelesen und ein entsprechender Rufvorgang eingeleitet wird. Dies wird nachfolgend noch näher anhand der Schritte S113-S115 erläutert. Wie bereits erläutert worden ist, können vorteilhafterweise die Verarbeitungsfunktionen über ein auf dem Bildschirm 11 des Rechners 4 dargestelltes Menü eingestellt und beliebig variiert werden.

Wie in Figur 3b gezeigt ist, wird in einem Schritt S110 nach einem Suchvorgang überprüft, ob zu der markierten Buchstabenfolge auf dem Verzeichnis-Server 5 mehrere passende Einträge ermittelt worden sind. Falls ja, wird auf dem Bildschirm 11 ein Auswahlfenster geöffnet (Schritt S111), in dem sämtliche ermittelte Einträge dargestellt sind. Der Benutzer kann anschließend durch Betätigung der Tastatur 6 bzw. Maus 7 einen gewünschten Eintrag aus den dargestellten Einträgen auswählen (S112), wobei der nunmehr ausgewählte Eintrag des Benutzers der weiteren Verarbeitung zugrunde gelegt wird. Wie in Figur 5b gezeigt ist, wurde bei dem in Figur 5 gezeigten Beispiel lediglich der Textbestandteil "Mustermann" markiert. Im Schritt S109 wurden somit auf der Datenbank des Verzeichnis-Servers 5 mehrere passende Einträge mit unterschiedlichen Vornamen ermittelt, die gemäß Schritt S111 anschließend in Form eines Auswahlfensters angezeigt werden. Dies ist beispielhaft in Figur 5e dargestellt. Der Benutzer kann somit beispielsweise den gewünschten Zielteilnehmer "Max Mustermann" auswählen, so daß der Rechner 4 anschließend einen Anruf dieses Teilnehmers initiieren kann.

Im Schritt S113 wird überprüft, ob die bereits zuvor erläuterte Wahlfunktion von dem Benutzer aktiviert worden ist. Ist dies der Fall und wurde von dem Verzeichnis-Server 5 im Schritt S109 für die ausgewählte Buchstabenfolge eine entsprechende Rufnummer in Form einer Wahlinformation zurückgemeldet, leitet die in Figur 2 gezeigte Steuerung 8 diese Wahlinformation an die Standard-Telefonschnittstelle (TAPI-Schnittstelle) 9 weiter (Schritt S114), so daß die entsprechende Rufnummer im Schritt S115 analog zu dem Fall einer markierten Ziffernfolge (vgl. Figur 4) gewählt werden kann. Bei der in Figur 5e dargestellten Situation ist es somit möglich, einen gewünschten Teilnehmer aus den im Schritt S109 ermittelten Einträgen auszuwählen und zugleich auf einfache Art und Weise anzurufen, da im Schritt S109 zusammen mit den passenden Einträgen auch die jeweils in der Datenbank des Verzeichnis-Servers 5 gespeicherten Rufnummern zurückgemeldet worden sind.

Wurde jedoch im Schritt S113 die Nichtaktivierung der Wahlfunktion festgestellt, erfolgt keine automatische Rufnummernwahl der Schritte S114 und S115 und es wird unter Umgehung der TAPI-Schnittstelle 9 direkt im Schritt S116 eine Rückmeldung der LDAP-Schnittstelle 10 über den Abschluß des im Schritt S109 durchgeführten Suchvorgangs auf dem Bildschirm 11 angezeigt. Wurden hingegen die Schritte S114 und S115 durchlaufen, erfolgt im Schritt S116 eine Rückmeldung der TAPI-Schnittstelle 9 über die durchgeführte Rufnummernwahl. Anschließend ist der Verfahrensablauf beendet (Schritt S117) und es kann durch Markierung einer neuen Zeichenfolge auf dem Bildschirm wieder von vorne begonnen werden.

Alternativ ist beispielsweise auch der Einsatz einer MAPI-Schnittstelle denkbar, so daß nach Markieren einer Zeichenfolge durch den Benutzer automatisch oder nach Bestätigung durch den Benutzer eine der markierten Zeichenfolge entsprechende e-mail-Adresse erkannt und ausgewertet wird, um somit an einen der markierten Zeichenfolge entsprechenden e-mail-Empfänger eine e-mail versenden zu können. Ebenso kann analog zum oben beschriebenen Fall nach einem entsprechenden e-mail-Adresseneintrag in einem Verzeichnis-Server gesucht werden, nachdem der Benutzer einen bestimmten Namen markiert hat, um somit nach Auffinden eines Eintrags ein automatisches Versenden der e-mail zu ermöglichen. In Fig. 3b sind entsprechend gestrichelt zusätzliche Schritte S118 und S119 dargestellt. So kann beispielsweise im Schritt S118 nach Durchlaufen des Schritts S113 geprüft werden, ob die e-mail-Funktion aktiviert ist. Falls ja, wird die gegebenenfalls im Schritt S109 zu der markierten Zeichenfolge ermittelte e-mail-Adresse an eine MAPI-Schnittstelle des Rechners 4 übergeben, die anschließend eine gewünschte Mitteilung (e-mail) an einen durch die e-mail-Adresse spezifizierten Empfänger veranlaßt.

Selbstverständlich ist auch die direkte Erkennung einer markierten e-mail-Adresse möglich. So können analog zu den Schritte S107, S114 und S115 entsprechende Schritte für das Erkennen einer markierten e-mail-Adresse, die Übergabe der e-mail-Adresse an die MAPI-Schnittstelle und das Versenden der gewünschten e-mail über die MAPI-Schnittstelle vorgesehen sein.

## Patentansprüche

1. Verfahren zum Ermitteln und Verarbeiten von für den Aufbau einer Telefonverbindung in einem CTI-System zu verwendenden Informationen,
umfassend die Schritte:
a) Auswahl einer beliebigen, auf Anzeigemitteln (11) von Rechnermitteln (4) des CTI-Systems durch ein beliebiges Anwendungsprogramm dargestellten Zeichenfolge durch einen Benutzer (S101-S103),
b) automatisches Einlesen der ausgewählten Zeichenfolge mittels eines separaten Anwendungsprogramms (8) zum anwendungsübergreifenden Einlesen von beliebigen auf den Anzeigemitteln (11) dargestellten Zeichenfolgen,
c) Prüfen der eingelesenen Zeichenfolge (S104-S106) durch das separate Anwendungsprogramm (8) hinsichtlich der Relevanz dieser Zeichenfolge für einen Aufbau einer Telefonverbindung, und
d) bei positivem Prüfungsergebnis Initiieren einer Telefonverbindung durch das separate Anwendungsprogramm (8) mittels der Zeichenfolge.

2. Verfahren nach Anspruch 1,
**dadurch gekennzeichnet,**
**daß** im Schritt a) die Zeichenfolge von dem Benutzer durch Markieren der Zeichenfolge ausgewählt wird (S102, S103).

3. Verfahren nach Anspruch 1 oder 2,
**dadurch gekennzeichnet,**
**daß** im Schritt b) der Inhalt der im Schritt a) ausgewählten Zeichenfolge automatisch auf Relevanz für eine Rufnummernwahl in dem CTI-System überprüft und bei Feststellen mangelnder Relevanz automatisch eine Eingabemöglichkeit zur Eingabe einer neuen Zeichenfolge durch den Benutzer zur Verfügung gestellt wird (S104-S106), wobei eine neu eingegebene Zeichenfolge anschließend anstelle der im Schritt a) ursprünglich ausgewählten Zeichenfolge den Schritten b) und c) unterzogen wird.

4. Verfahren nach Anspruch 3,
**dadurch gekennzeichnet,**
**daß** die Eingabemöglichkeit zur Eingabe einer neuen Zeichenfolge in Form eines Eingabefensters auf den Anzeigemitteln (11) der Rechnermittel (4) des CTI-Systems zur Verfügung gestellt wird.

5. Verfahren nach Anspruch 3 oder 4,
**dadurch gekennzeichnet,**
**daß** im Schritt b) die Relevanz der Zeichenfolge für eine Rufnummernwahl in dem CTI-System **dadurch** beurteilt wird, daß bei einer eine Ziffernfolge umfassenden Zeichenfolge automatisch überprüft wird, ob die Ziffernfolge als Rufnummer für das CTI-System in Frage kommen kann, und daß bei einer eine Buchstabenfolge umfassenden Zeichenfolge automatisch überprüft wird, ob die Buchstabenfolge als Name oder Adresse für das CTI-System in Frage kommen kann.

6. Verfahren nach einem der vorhergehenden Ansprüche,
**dadurch gekennzeichnet,**
**daß** im Schritt c) die ausgewählte Zeichenfolge abhängig von dem Inhalt der Zeichenfolge unterschiedlichen Verarbeitungsfunktionen unterzogen wird (S107-S117).

7. Verfahren nach Anspruch 6,
**dadurch gekennzeichnet,**
**daß** die Verarbeitungsfunktionen des CTI-Systems durch den Benutzer frei konfiguriert werden können.

8. Verfahren nach einem der vorhergehenden Ansprüche,
**dadurch gekennzeichnet,**
**daß** im Schritt c) für den Fall, daß die ausgewählte Zeichenfolge eine Ziffernfolge umfaßt, automatisch oder nach Bestätigung durch den Benutzer eine dieser Ziffernfolge entsprechende Rufnummer über Telekommunikationsmittel (9, 1) des CTI-Systems gewählt wird (S114, S115).

9. Verfahren nach Anspruch 8,
**dadurch gekennzeichnet,**
**daß** die der ausgewählten Ziffernfolge entsprechende Rufnummer zur Wahl der Rufnummer automatisch oder nach Bestätigung durch den Benutzer einer Telefonschnittstelle (9) der Rechnermittel (4) des CTI-Systems zugeführt werden.

10. Verfahren nach einem der vorhergehenden Ansprüche,
**dadurch gekennzeichnet,**
**daß** im Schritt c) für den Fall, daß die ausgewählte Zeichenfolge einer e-mail-Adresse entspricht, automatisch oder nach Bestätigung durch den Benutzer über Telekommunikationsmittel (9, 10) des CTI-Systems an diese e-mail-Adresse eine gewünschte Mitteilung verschickt wird (S118, S119).

11. Verfahren nach einem der vorhergehenden Ansprüche,
**dadurch gekennzeichnet,**
**daß** im Schritt c) geprüft wird, ob die ausgewählte Zeichenfolge eine Buchstabenfolge umfaßt, und
falls dies zutrifft automatisch oder nach Bestätigung durch den Benutzer ein Suchvorgang in entsprechenden Speichermitteln (5) des CTI-Systems nach einem der jeweiligen Buchstabenfolge entsprechenden Eintrag oder eine Neueintragung eines der Buchstabenfolge entsprechenden Eintrags in den Speichermitteln (5) des CTI-Systems durch das separate Anwendungsprogramm veranlaßt wird.

12. Verfahren nach Anspruch 11,
**dadurch gekennzeichnet,**
**daß** im Schritt c) bei erfolgreicher Durchführung des Suchvorgangs in den Speichermitteln (5) des CTI-Systems automatisch oder nach Bestätigung durch den Benutzer die der jeweiligen Buchstabenfolge entsprechende und in den Speichermitteln (5) gespeicherte Rufnummer ermittelt und über Telekommunikationsmittel (9, 1) des CTI-Systems diese Rufnummer gewählt wird.

13. Verfahren nach Anspruch 11 oder 12,
**dadurch gekennzeichnet,**
**daß** für den Fall, daß im Schritt c) infolge des Suchvorgangs mehrere zu der jeweiligen Buchstabenfolge passende Einträge in den Speichermitteln (5) des CTI-Systems ermittelt worden sind, eine Auswahlmöglichkeit für den Benutzer zur Verfügung gestellt wird, um einen der ermittelten Einträge auszuwählen (S110-S112).

14. Verfahren nach Anspruch 11,
**dadurch gekennzeichnet,**
**daß** im Schritt c) bei erfolgreicher Durchführung des Suchvorgangs in den Speichermitteln (5) des CTI-Systems automatisch oder nach Bestätigung durch den Benutzer die der jeweiligen Buchstabenfolge entsprechende und in den Speichermitteln (5) gespeicherte e-mail-Adresse ermittelt und an diese e-mail-Adresse über Telekommunikationsmittel (9, 1) des CTI-Systems eine Mitteilung verschickt wird.

15. Verfahren nach einem der Ansprüche 6-14,
**dadurch gekennzeichnet,**
**daß** abhängig von der im Schritt c) durchgeführten Verarbeitungsfunktion eine Rückmeldung der Rechnermittel (4) des CTI-Systems über die Durchführung der jeweiligen Verarbeitungsfunktion ausgegeben wird (S116).

16. Verfahren nach einem der vorhergehenden Ansprüche,
**dadurch gekennzeichnet,**
**daß** die Schritte b) und c) von den Rechnermitteln (4) des CTI-Systems durchgeführt werden.

17. CTI-System, umfassend
Telekommunikationsmittel (1) zum Aufbau einer Telekommunikationsverbindung, und
Rechnermittel (4) die mit den Telekommunikationsmitteln gekoppelt sind und diese steuern oder überwachen,
wobei die Rechnermittel (4) umfassen:
Auswahlmittel (6, 7) zur Auswahl einer beliebigen auf Anzeigemitteln (5) der Rechnermittel (4) durch ein beliebiges Anwendungsprogramm dargestellten Zeichenfolge durch einen Benutzer,
ein separates Anwendungsprogramm (8) zum automatischen, anwendungsübergreifenden Einlesen von beliebigen auf den Anzeigemitteln (5) dargestellten Zeichenfolgen sowie zum Prüfen von eingelesenen Zeichenfolgen hinsichtlich ihrer Relevanz für einen Aufbau einer Telefonverbindung, und Verarbeitungsmittel (9, 10), um bei positivem Prüfungsergebnis einen Aufbau einer Telefonverbindung mittels der eingelesenen Zeichenfolge zu veranlassen.

18. CTI-System nach Anspruch 17,
**dadurch gekennzeichnet,**
**daß** die Auswahlmittel (6, 7) Eingabemittel zum Markieren der auszuwählenden Zeichenfolge durch den Benutzer umfassen.

19. CTI-System nach Anspruch 17 oder 18,
**dadurch gekennzeichnet,**
**daß** die Steuermittel (8) und die Verarbeitungsmittel (9, 10) der Rechnermittel (4) derart ausgestaltet sind, daß sie die ausgewählte Zeichenfolge gemäß einem im Verfahren nach einem der Ansprüche 1-14 auswerten bzw. verarbeiten.

20. CTI-System nach einem der Ansprüche 17-19,
**dadurch gekennzeichnet,**
**daß** die Verarbeitungsmittel (9, 10) eine Telefonschnittstelle (9) zum Wählen einer Rufnummer über die Telekommunikationsmittel (1) umfassen.

21. CTI-System nach einem der Ansprüche 17-20,
**dadurch gekennzeichnet,**
**daß** die Verarbeitungsmittel (9, 10) eine Schnittstelle (10) zum Zugreifen auf Speichermittel (5) des CTI-Systems umfassen, wobei die Speichermittel (5) eine Vielzahl von für eine Rufnummernwahl relevante Informationen speichern.

22. CTI-System nach einem der Ansprüche 17-21,
**dadurch gekennzeichnet,**
**daß** die Verarbeitungsmittel (9, 10) eine Schnittstelle zum Versenden einer e-mail an eine bestimmte e-mail-Adresse über die Telekommunikationsmittel (1) umfassen.

## Claims

1. Method for determining and processing items of information that are relevant for setting up a telephone connection in a CTI system,
comprising the steps:
a) selection by a user of an arbitrary character string shown on display means (11) of computing means (4) of the CTI system by an arbitrary application program (S101-S103),
b) automatic reading-in of the character string selected in said selection process by a separate application program (8) for the reading in the character string in a manner that covers all applications of arbitrary character strings shown on the display means(11),
c) checking of the character string read in (S104-S106) by the separate application program (8) with respect to the relevance of this character string for a setting up of a telephone connection, and
d) if the result of the check is positive, initiation of a telephone connection by the separate application program (8) by means of the character string.

2. Method according to claim 1,
**characterised in that**,
in step a) the character string is selected by the user by marking the character string (S102, S103).

3. Method according to claim 1 or 2,
**characterised in that**
in step b), the content of the character string selected in step a) is automatically checked for relevance for a call number dialling in the CTI system, and, if a lack of relevance is determined a possibility of input of a new character string by the user is provided automatically (S104-S106), with a newly entered character string subsequently being subjected to the steps b) and c) instead of the character string originally selected in step a).

4. Method according to claim 3,
**characterised in that**
the option for entering a new character string is provided in the form of an input window on the display means (11) of the processing means (4) of the CTI system.

5. Method according to claim 3 or 4
**characterised in that**
in step b) the relevance of the character string for dialling a call number in the CTI system is assessed by checking, for a character string comprising a string of numerals, whether the string of numerals can be considered as a call number for the CTI system, and checking, for a character string comprising a string of letters, whether the string of letters can be considered as a name or address for the CTI system.

6. A method as claimed in one of the previous claims,
**characterised in that**
in step c), the selected character string is subjected to various processing functions, depending on the content of the character string (S107-S117).

7. Method according to claim 6,
**characterised in that**
the processing functions of the CTI system can be freely configured by the user.

8. Method according to one of the previous claims
**characterised in that**,
in step c), for a case in which the selected character string comprises a string of numerals, a call number corresponding to said string of numerals is dialled via telecommunication means (9, 1) of the CTI system automatically or on confirmation by the user (S114, S 115).

9. Method according to claim 8,
**characterised in that**
a call number corresponding to the selected string of numerals is supplied to a telephone interface (9) of a computer (4) of the CTI system automatically or on confirmation by the user for the dialling of the call number.

10. Method according to one of the previous claims
**characterised in that**,
in step d), for a case in which the selected character string corresponds to an e-mail address, a desired communication to said e-mail address is sent automatically or on confirmation by the user via a telecommunication means (9, 10) of the CTI system (S118, S199).

11. Method according to one of the previous claims
**characterised in that**
a check is made in step c) as to whether the selected character string comprises a string of letters, and
if it does, a search process is initiated in a corresponding storage (5) of the CTI system for an entry corresponding to the respective string of letters or a new entry corresponding to the string of letters is made in the storage (5) of the CTI system by the separate application program.

12. Method according claim 11
**characterised in that**,
in step c), given successful execution of the search process in the storage (5) of the CTI system, a call number corresponding to the respective string of letters and stored in the storage (5) is determined automatically or on confirmation by the user and this call number is dialled via a telecommunication means (9, 1) of the CTI system.

13. Method according to claim 11 or 12,
**characterised in that**
for the case in which in step c), as a result of the search process, a number of entries matching the string of letters is found in the storage (5) of the CTI system, the user is provided with an option for selecting one of the entries determined (s110-S112).

14. Method according to claim 11,
**characterised in that**,
in step c), given successful execution of the search process in the storage (5) of the CTI system, automatically or on confirmation by the user, the e-mail address corresponding to the respective string of letters and stored in the storage (5) is determined and a communication is sent to said e-mail address via telecommunication means (9, 1) of the CTI system.

15. Method according to one of the claims 6-14
**characterised in that**,
depending on the processing function executed in step c), an acknowledgement of the processing means (4) of the CTI system about the execution of the respective processing function is output (S116).

16. Method according to one of the previous claims
**characterised in that**
steps b) and c) are carried out by the processing means (4) of the CTI system.

17. CTI system, comprising:
Telecommunication means (1) for setting up a telecommunication connection, and
processing means (4) which are coupled to the telecommunication means and control or monitor the latter, with the processing means (4) including:
Selection means (6, 7) for selection by a user of an arbitrary character string shown on a display (5) of the processing means (4) by an arbitrary application program,
A separate application program (8) for automatic reading in of arbitrary character strings shown on the display in a manner that applies to all applications, and for checking selected character strings with respect to their relevance for setting up a telephone connection, and
Processing means (9, 10) to initiate a setting up of a telephone connection by means of the character string read in, given a positive check result.

18. CTI system according to claim 17,
**characterised in that**
the selection means (6, 7) includes input means for marking by the user of the character string to be selected.

19. CTI system according to claim 17 or 18
**characterised in that**
the control means (8) and the processing means (9, 10) are fashioned in such a way as to evaluate and process the selected character string in accordance with a method given in one of the claims 1-14.

20. CTI system according to one of the claims 17-19
**characterised in that**
the processing means (9, 10) include a telephone interface (9) for selecting a call number via the telecommunication means (1).

21. CTI system according to one of the claims 17-20
**characterised in that**
the processing means (9, 10) includes an interface (10) for accessing storage means (5) of the CTI system, with the storage means (5) storing a plurality of items of information that are relevant for a call number dialling.

22. CTI system according to one of the claims 17-21
**characterised in that**
the processing means (9, 10) includes an interface for sending an e-mail to a particular e-mail address via the telecommunication means (1).

## Revendications

1. Procédé de détection et de traitement d'informations à utiliser pour l'établissement d'une liaison téléphonique dans un système CTI, comprenant les étapes suivantes:
a) sélection, par un utilisateur, d'une suite de signes quelconque, représentée sur des moyens d'affichage (11) de moyens informatiques (4) du système CTI par un programme d'application quelconque (S101-S103),
b) lecture automatique de la suite de signes sélectionnée au moyen d'un programme d'application séparé (8) aux fins de la lecture de suites de signes quelconques représentées sur les moyens d'affichage (11), quelle que soit l'application,
c) vérification de la suite de signes lue (S104-S106) par le programme d'application séparé (8) quant à la pertinence de cette suite de signes pour un établissement d'une liaison téléphonique et
d) étant donné un résultat positif de la vérification, initialisation d'une liaison téléphonique par le programme d'application séparé (8) au moyen de la suite de signes.

2. Procédé selon la revendication 1, **caractérisé en ce que**, à l'étape a), la suite de signes est sélectionnée par l'utilisateur par marquage de la suite de signes (S102, S103).

3. Procédé selon la revendication 1 ou 2, **caractérisé en ce que**, à l'étape b), le contenu de la suite de signes sélectionnée à l'étape a) est automatiquement vérifié quant à sa pertinence pour une numérotation de numéro d'appel dans le système CTI et, s'il est constaté qu'il n'est pas pertinent, une possibilité de saisie aux fins de la saisie d'une nouvelle suite de signes par l'utilisateur est automatiquement mise à disposition (S104-S106), une suite de signes nouvellement saisie, au lieu de la suite de signes sélectionnée à l'origine à l'étape a), subissant ensuite les étapes b) et c).

4. Procédé selon la revendication 3, **caractérisé en ce que** la possibilité de saisie aux fins de la saisie d'une nouvelle suite de signes est mise à disposition sous la forme d'une fenêtre de saisie sur des moyens d'affichage (11) des moyens informatiques (4) du système CTI.

5. Procédé selon la revendication 3 ou 4, **caractérisé en ce que**, à l'étape b), la pertinence de la suite de signes pour une numérotation de numéro d'appel dans le système CTI est appréciée par vérification automatique, dans le cas d'une suite de signes comprenant une suite de chiffres, que la suite de chiffres peut être envisagée en tant que numéro d'appel pour le système CTI et par vérification automatique, dans le cas d'une suite de signes comprenant une suite de lettres, que la suite de lettres peut être envisagée en tant que nom ou adresse pour le système CTI.

6. Procédé selon l'une des revendications précédentes, **caractérisé en ce que**, à l'étape c), la suite de signes sélectionnée est soumise à différentes fonctions de traitement en fonction du contenu de la suite de signes (S107-5117).

7. Procédé selon la revendication 6, **caractérisé en ce que** les fonctions de traitement du système CTI peuvent être configurées librement par l'utilisateur.

8. Procédé selon l'une des revendications précédentes, **caractérisé en ce que**, à l'étape c), dans le cas où la suite de signes sélectionnée comprend une suite de chiffres, un numéro d'appel correspondant à cette suite de chiffres est numéroté, automatiquement ou après confirmation par l'utilisateur, via des moyens de télécommunications (9, 1) du système CTI (S114, S115).

9. Procédé selon la revendication 8, **caractérisé en ce que** le numéro d'appel correspondant à la suite de chiffres sélectionnée, aux fins de la numérotation du numéro d'appel, est envoyé, automatiquement ou après confirmation par l'utilisateur, sur une interface téléphonique (9) des moyens informatiques (4) du système CTI.

10. Procédé selon l'une des revendications précédentes, **caractérisé en ce que**, à l'étape c), dans le cas où la suite de signes sélectionnée correspond à une adresse de courrier électronique, une communication souhaitée est envoyée, automatiquement ou après confirmation par l'utilisateur, à cette adresse de courrier électronique via des moyens de télécommunications (9, 10) du système CTI (S118, S119).

11. Procédé selon l'une des revendications précédentes, **caractérisé en ce que**, à l'étape c), il est vérifié si la suite de signes sélectionnée comprend une suite de lettres et, si tel est le cas, le programme d'application séparé provoque, automatiquement ou après confirmation par l'utilisateur, une opération de recherche dans des moyens de mémoire adéquats (5) du système CTI selon une entrée correspondant à la suite de lettres respective ou un nouvel enregistrement d'une entrée correspondant à la suite de lettres dans les moyens de mémoire (5) du système CTI.

12. Procédé selon la revendication 11, **caractérisé en ce que**, à l'étape c), si l'opération de recherche a été effectuée avec succès dans les moyens de mémoire (5) du système CTI, le numéro d'appel correspondant à la suite de lettres respective et stocké dans les moyens de mémoire (5) est détecté, automatiquement ou après confirmation par l'utilisateur, et ce numéro d'appel est numéroté via des moyens de télécommunications (9, 1) du système CTI.

13. Procédé selon la revendication 11 ou 12, **caractérisé en ce que**, au cas où, à l'étape c), suite à l'opération de recherche, plusieurs entrées appropriées pour la suite de lettres respective ont été détectées dans les moyens de mémoire (5) du système CTI, une possibilité de sélection est mise à la disposition de l'utilisateur pour sélectionner l'une des entrées détectées (S110-S112).

14. Procédé selon la revendication 11, **caractérisé en ce que**, à l'étape c), si l'opération de recherche a été effectuée avec succès dans les moyens de mémoire (5) du système CTI, l'adresse de courrier électronique correspondant à la suite de lettres respective et stockée dans les moyens de mémoire (5) est détectée, automatiquement ou après confirmation par l'utilisateur, et une communication est envoyée à cette adresse de courrier électronique via des moyens de télécommunications (9, 1) du système CTI.

15. Procédé selon l'une des revendications 6 à 14, **caractérisé en ce que**, en fonction de la fonction de traitement exécutée à l'étape c), une information en retour des moyens informatiques (4) du système CTI concernant l'exécution de la fonction de traitement respective est produite en sortie (S116).

16. Procédé selon l'une des revendications précédentes, **caractérisé en ce que** les étapes b) et c) sont exécutées par les moyens informatiques (4) du système CTI.

17. Système CTI, comprenant
des moyens de télécommunications pour établir une liaison de télécommunications et
des moyens informatiques (4) qui sont couplés aux moyens de télécommunications et commandent ou surveillent ceux-ci,
les moyens informatiques (4) comprenant:
des moyens de sélection (6, 7) pour sélection, par un utilisateur, d'une suite de signes quelconque, représentée sur des moyens d'affichage (5) des moyens informatiques (4) par un programme d'application quelconque,
un programme d'application séparé (8) pour la lecture automatique, quelle que soit l'application, de suites de signes quelconques représentées sur les moyens d'affichage (5) et pour vérifier des suites de signes lues quant à leur pertinence pour l'établissement d'une liaison téléphonique et
des moyens de traitement (9, 10) pour, étant donné un résultat positif de la vérification, faire établir une liaison téléphonique au moyen de la suite de signes lue.

18. Système CTI selon la revendication 17, **caractérisé en ce que** les moyens de sélection (6, 7) comprennent des moyens de saisie pour le marquage, par l'utilisateur, de la suite de signes à sélectionner.

19. Système CTI selon la revendication 17 ou 18, **caractérisé en ce que** les moyens de commande (8) et les moyens de traitement (9, 10) des moyens informatiques (4) sont réalisés de manière telle qu'ils évaluent resp. traitent la suite de signes sélectionnée selon le procédé selon l'une des revendications 1 à 14.

20. Système CTI selon l'une des revendications 17 à 19, **caractérisé en ce que** les moyens de traitement (9, 10) comprennent une interface téléphonique (9) pour numéroter un numéro d'appel via les moyens de télécommunication (1).

21. Système CTI selon l'une des revendications 17 à 20, **caractérisé en ce que** les moyens de traitement (9, 10) comprennent une interface (10) pour accéder à des moyens de mémoire (5) du système CTI, les moyens de mémoire (5) stockant une pluralité d'informations pertinentes pour une numérotation de numéro d'appel.

22. Système CTI selon l'une des revendications 17 à 21, **caractérisé en ce que** les moyens de traitement (9, 10) comprennent une interface pour envoyer un courrier électronique à une adresse de courrier électronique déterminée via les moyens de télécommunications (1).
